# EUROPEAN PATENT SPECIFICATION

(11) **EP 3 059 390 B1**
(45) Date of publication and mention of the grant of the patent: **04.03.2020**
(21) Application number: 16151646.3
(22) Date of filing: 18.01.2016
(51) Int. Cl.: F01D 5/14, F01D 5/18, F01D 5/28

(54) **VANE ASSEMBLY FOR A GAS TURBINE ENGINE, AIRFOIL AND METHOD OF MAKING**
SCHAUFELANORDNUNG FÜR EINEN GASTURBINENMOTOR, PROFIL UND HERSTELLUNGSVERFAHREN
ENSEMBLE DE STATOR POUR MOTEUR DE TURBINE À GAZ, SURFACE PORTANTE ET MÉTHODE DE FABRICATION

(30) Priority: 18.02.2015 US 201562117721 P
(43) Date of publication of application: 24.08.2016
(73) Proprietor: Rolls-Royce Corporation, Indianapolis, Indiana 46225 (US)
(72) Inventor: Thomas, David J., Brownsburg, IN Indiana 46112 (US)
(74) Representative: Gille Hrabal

(56) References cited:
- EP-A2- 1 085 170
- GB-A- 2 262 315
- US-A1- 2008 025 846

## Description

### FIELD OF THE DISCLOSURE

The present disclosure relates generally to vanes used in gas turbine engines, and more specifically to vanes used in gas turbine engines that contain composite materials.

### BACKGROUND

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Products of the combustion reaction directed into the turbine flow over airfoils included in stationary vanes and rotating blades of the turbine. The interaction of combustion products with the airfoils heats the airfoils to temperatures that require the airfoils to be made from high-temperature resistant materials and/or to be actively cooled by supplying relatively cool air to the vanes and blades. To this end, some airfoils for vanes and blades are incorporating composite materials adapted to withstand very high temperatures. Design and manufacture of vanes and blades from composite materials presents challenges because of the geometry and strength required for the parts.

US 2008/025846 A1 discloses a CMC airfoil formed with CMC stitches interconnected between opposed walls of the airfoil to restrain outward flexing of the walls resulting from pressurized cooling air within the airfoil. The airfoil comprises a core having an inner wrap and a ribbon that extends back and forth within an interior space formed by the inner wrap to form a plurality of axially discontinuous spaced ribs that interconnect a pressure side with a suction side of the airfoil.

EP 1 085 170 A2 discloses a turbine airfoil including at least one spar arrangement having a length less than an associated turbine airfoil length. During operation, the turbine airfoil has an outer skin surface which operates at a substantially higher temperature than that of an internal supporting parted spar arrangement. The parted spar arrangement permits the turbine airfoil outer skin surface to thermally expand between spar arrangements, thus preventing self-constraining thermal stresses from forming within the spar arrangement or the airfoil skin surfaces.

GB 2 262 315 A discloses a turbomachine blade comprising a central core covered by a plurality of layers of composite material, and an outer sleeve of woven composite material. A network of transverse seams pass through the layers of composite material, and preferably also the core and the outer sleeve. Such a construction is particularly applicable to large diameter turbine blades.

### SUMMARY

According to the invention a ceramic-matrix composite airfoil according to claim 1, a vane assembly according to claim 8 and a method of making a ceramic-matrix compsite airfoil according to claim 9 are provided. The present disclosure may comprise one or more of the following features and combinations thereof.

According to one aspect of the present disclosure, a vane assembly for a gas turbine engine may include an inner and outer platforms spaced apart from one another to define a gas path therebetween and a ceramic-matrix composite airfoil that extends from the inner platform to the outer platform across the gas path. The ceramic-matrix composite airfoil may be formed to include a pressure side, a suction side, and a plurality of axially-aligned ribs spaced radially apart from one another between the inner platform and the outer platform that interconnect the pressure side with the suction side.

In illustrative embodiments, the ceramic-matrix composite airfoil may include a core and an overwrap. The a core may have an inner wrap and a ribbon that extends back and forth within an interior space formed by the inner wrap to form the plurality of ribs. The overwrap may wrap around the core to form the pressure side and the suction side of the airfoil.

In illustrative embodiments, the inner wrap may be formed to include a plurality of slits and the ribbon extends through the slits.

In illustrative embodiments, the inner wrap may include a tube of ceramic-containing reinforcement.

In illustrative embodiments, the ribbon may include ceramic-containing reinforcement and may be bonded to the inner wrap by a ceramic matrix. In some such embodiments, the tube of ceramic-containing reinforcement may be woven or braided so that the tube of ceramic-containing reinforcement does not have a seam that extends radially between the inner platform and the outer platform.

In illustrative embodiments, an axial width of the ribbon may be greater than a radial height of the ribbon.

In illustrative embodiments, a first portion of the ribbon may extend circumferentially across the interior of the inner wrap at a generally constant distance from the inner platform. In some such embodiments, a second portion of the ribbon may extend circumferentially across the interior of the inner wrap at a variable distance from the inner platform. In some such embodiments, a third portion of the ribbon may extend radially along an outer surface of the inner wrap and may interconnect the first portion and the second portion of the ribbon.

In illustrative embodiments, the overwrap may include one or more plies of ceramic-containing reinforcement that are bonded to the inner wrap by a ceramic matrix.

According to another aspect of the present disclosure, a ceramic-matrix composite airfoil for use in a gas turbine engine may include a core and an overwrap. The overwrap may wrap around the core to form the pressure side and the suction side of the airfoil

In illustrative embodiments, the core may have an inner wrap and a ribbon that extends back and forth within an interior space formed by the inner wrap to form a plurality of radially discontinuous ribs that interconnect a pressure side with a suction side of the airfoil.

In illustrative embodiments, the inner wrap may include a tube of ceramic-containing reinforcement. The ribbon may include ceramic-containing reinforcement. The tube of ceramic-containing reinforcement included in the inner wrap may be bonded to the ceramic-containing reinforcement of the ribbon by a ceramic matrix.

In illustrative embodiments, an axial width of the ribbon may be greater than a radial height of the ribbon.

In illustrative embodiments, a first portion of the ribbon may extend circumferentially across the interior of the inner wrap at a variable distance from the inner platform. In some such embodiments, a second portion of the ribbon may extend circumferentially across the interior of the inner wrap at a generally constant distance from the inner platform. In some such embodiments, a third portion of the ribbon may extend radially along an outer surface of the inner wrap and may interconnect the first portion and the second portion of the ribbon.

In illustrative embodiments, the inner wrap may be formed to include a plurality of slits and the ribbon extends through the slits.

According to another aspect of the present disclosure, a method of making a ceramic-matrix composite airfoil for use in a gas turbine engine is taught. The method may include wrapping an overwrap around a core to define a pressure side and a suction side of the airfoil that are interconnected by a plurality of ribs and co-processing the core and the overwrap to bond the core and the overwrap with ceramic matrix material

In illustrative embodimetns, the method may include guiding a ribbon back and forth between generally opposing sides of a tube defined by an inner wrap to form the core having the plurality of ribs spaced radially apart from one another.

In illustrative embodiments, guiding the ribbon back and forth may include lacing the ribbon through slits formed in inner wrap so that a first portion of the ribbon is arranged inside an interior of the tube defined by the inner wrap and a second portion of the ribbon is arranged outside the interior of the tube defined by the inner wrap.

These and other features of the present disclosure will become more apparent from the following description of the illustrative embodiments.

### BRIEF DESCRIPTION OF THE DRAWINGS

Fig. 1 is perspective view of a vane assembly adapted for use in a gas turbine engine showing that the vane assembly includes an inner platform, an outer platform, and an airfoil that extends from the inner platform to the outer platform;
Fig. 2 is a cross sectional view of the airfoil shown in Fig. 1 taken at line 2-2 showing that the airfoil includes an outer wrap that forms a pressure side and a suction side of the airfoil and a core having a rib extending from the pressure side to the suction side;
Fig. 3 is a cross sectional view of the airfoil shown in Fig. 1 taken at line 3-3 showing that the core does not form the rib throughout the airfoil such that ribs formed by the core are radially discontinuous; and
Fig. 4 is an exploded perspective assembly view of the vane assembly of Figs. 1-3 showing that the core includes an inner wrap and a ribbon that extends back and forth through an interior region defined by the inner wrap to form the radially discontinuous ribs.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

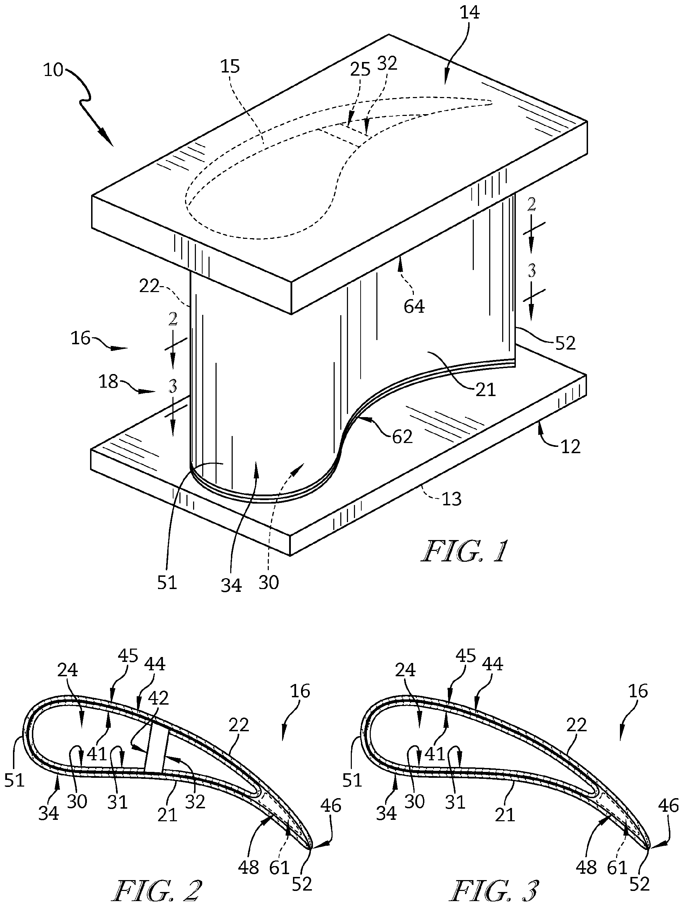

An illustrative turbine vane assembly 10 for use in a gas turbine engine is shown in Fig. 1. The turbine vane 10, sometimes simply called a turbine vane or vane 10, includes an inner platform 12, an outer platform 14, and an airfoil 16. The inner platform 12 and outer platform 14 are spaced apart in a radial direction R from one another and cooperate to define a flow path 18 for hot high pressure gasses moving through the turbine section of a gas turbine engine. The airfoil 16 extends in the radial direction R from the inner platform 12 to the outer platform 14 across the flow path 18 to interact with hot gasses moving through the flow path 18.

The airfoil 16 illustratively comprises ceramic-matrix composite materials adapted to withstand high temperatures and is shaped to redirect hot gasses before those gasses act on rotating blades arranged aft of the airfoil 16 as suggested in Fig. 1. The airfoil 16 is formed to include a pressure side 21, a suction side 22, and a plurality of ribs 25 that extend through an interior space 24 of the airfoil 16 as shown in Fig. 2. The ribs 25 are illustratively spaced radially apart from one another between the inner platform 12 and the outer platform 14 while remaining axially aligned as suggested in Figs. 2 and 3.

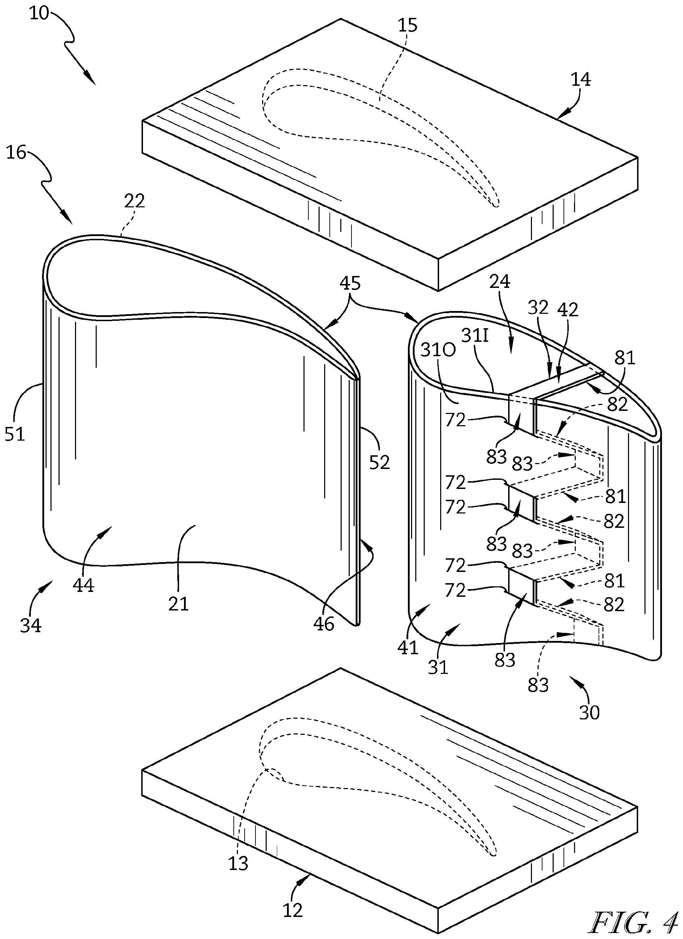

The illustrative airfoil includes a core 30 and an overwrap 34 as shown in Fig. 4. The core 30 includes an inner wrap 31 and a ribbon 32 that extends back and forth within the interior space 24 formed by the inner wrap 31 to form the plurality of radially-discontinuous ribs 25. The overwrap 34 wraps around the core 30 to hold the core 30 together and to form the pressure side 21 and the suction side 22 of the airfoil 16.

The inner wrap 31 of the core 30 illustratively comprises one or more tubes 41 of ceramic-containing reinforcement material suspended in a ceramic matrix 45 as suggested in Figs. 2 and 3. The tubes 41 of ceramic-containing reinforcement are illustratively woven or braided so that the tubes 41 do not have a seam that extends radially between the inner platform 12 and the outer platform 14. In other embodiments, the inner wrap 31 may comprise one or more plies of ceramic-containing reinforcement material suspended in a ceramic matrix and wrapped to form a tube with a seam.

The ribbon 32, for purposes of this application, may be formed from various elongated reinforcements such that the ribbon 32 may be wide and thin, rope-like, or have any suitable cross-sectional shape. The ribbon 32 of the illustrative embodiment includes one or more plies 42 of ceramic-containing reinforcement suspended in ceramic matrix 45 so that the ribbon 32 is bonded to the inner wrap 31 by the ceramic matrix45 as suggested in Fig. 2. In other embodiments, the ribbon 32 may include a ceramic-containing braided rope reinforcement, a ceramic-containing twisted yarn reinforcement, or some other arrangement of ceramic-containing reinforcement tows suspended in ceramic matrix.

The ribbon 32 extends back and forth across the interior region 24 formed by the inner wrap 41 between the pressure side 21 and the suction side 22 of the airfoil 16 to form the ribs 25 of the vane 10 as suggested in Fig. 4. The ribbon 32 illustratively passes through the slits 72 formed in the tubes 41 of the inner wrap 31 and may be secured to the inner wrap 31 by the ceramic matrix 45, optional stitches of ceramic-containing fiber, or the like. In the illustrative embodiment, an axial width 32W of the ribbon is greater than a radial height 32H of the ribbon 32 as shown in Fig. 4.

The ribbon 32 has a flat portions 81, angled portions 82, and connection portions 83 as shown in Fig. 4. The flat portions 81 of the ribbon 32 extend circumferentially across the interior 24 of the inner wrap 31 at a generally constant distance from the inner platform 12. The angled portions 82 of the ribbon 32 extend circumferentially across the interior 24 of the inner wrap 31 at a variable distance from the inner platform 12 forming an angle with the inner platform 12. The connection portions 83 extend radially along the tubes 41 of the inner wrap 31 and are directly coupled to the inner wrap 31 by ceramic matrix 45 and/or by other means (e.g. stitches etc.). The connection portions 83 of the ribbon 32 in the illustrative embodiment extend radially along an outer surface 310 of the inner wrap 32 and interconnect the flat portions 81 with the angled portions 82 of the ribbon 32. In some embodiments, the connection portions 83 of the ribbon 32 may extend radially along an inner surface 31I of the inner
wrap 31.

The present disclosure contemplates a non-continuous rib (e.g. ribs 25) formed by stitching a continuous ribbon 32 made of reinforcing ceramic-containing fabric between the pressure and suctions sides of an airfoil 16. While the ribbon 32 itself would be continuous, the architecture would be capable of differential thermal expansion between the pressure and suction sides 21, 22 of the airfoil 16. In the illustrative embodiment shown, the ribbon 32 zigzags from pressure side 21 to suction side 22 penetrating the fabric of the inner wrap 31 included in the core 30 after each switchback.

The overwrap 34 illustratively includes one or more plies 44 of ceramic-containing reinforcement that wraps around the core 30 as shown in Figs. 2-4. The plies (sometimes called sheets) 44 of ceramic-containing reinforcement is shown wrapped from the trailing edge 52 of the airfoil 16 around the leading edge 51 of the airfoil 16 so that a seam 46 of the overwrap 34 is located at the trailing edge 52. In some embodiments, the seam 46 of the overwrap 34 may be located elsewhere or the overwrap 34 may include a woven or braided tube of ceramic-containing material without a radially-extending seam. The plies 44 are suspended in the ceramic-matrix 45 when assembled into the airfoil 16.

A filler 48 may be arranged between the seam 46 of the plies 44 included in the overwrap 34 at the trailing edge 52 of the airfoil 16 and the core 30 as shown in Figs. 2 and 3. The filler 48, sometimes called a noodle, may comprise chopped fiber or other types of ceramic-containing reinforcement 61 suspended in the ceramic matrix 45.

In the illustrative embodiment, the inner platform 12 and the outer platform 14 comprise ceramic materials adapted to withstand high temperatures. Each of the inner and the outer platforms 12, 14 may be formed to include a corresponding aperture 13, 15 adapted to allow entry and exit of cooling air into and out of the interior 24 of the core 30. Each of the inner and the outer platforms 12, 14 are illustratively coupled to the airfoil 16 by a joint 62, 64 which may be ceramic matrix, bi-casting, braze, pins, fasteners or otherwise connected by coupling means.

In some embodiments, one or both of the inner platform 12 and the outer platform 14 may be made from a metallic material, such as, for example, a nickel-based or cobalt-based super alloy (e.g. Inconel, Waspaloy, etc.). In some such embodiments, the airfoil 16 may be received in an aperture formed in the metallic inner and/or the metallic outer platforms. This arrangement may be designed allow the airfoil 16 to expand and contract at a rate different from that of the metallic inner and/or the metallic outer platforms.

The exemplary turbine vane assembly 10 is shown as a singlet, having one airfoil that extends between the inner platform 12 and the outer platform 14 as shown in Fig. 1. In some embodiments, a turbine vane assembly in accordance with the present disclosure may be a doublet or multi-airfoil segment, having two or more airfoils that extend between the inner platform and the outer platform. In some embodiments, a turbine vane assembly in accordance with the present disclosure may be a full ring, having an inner and/or outer platform that forms a full hoop with multiple airfoils arranged radially between the inner and outer platforms and spaced circumferentially around the full hoop(s). In some embodiments, the vane assembly 10 disclosed herein may be used in the compressor section of a gas turbine engine upon a design need for high temperature capability in the compressor.

In illustrative applications, the airfoil 16 disclosed herein may be also be incorporated into a blade for a gas turbine engine. In such applications, the outer platform 14 may be replaced by a blade tip and/or a blade shroud coupled to the airfoil 16. Further, a root and/or other attachment feature may be coupled to the airfoil 16 and/or the inner platform 12 to allow coupling of the airfoil 16 to a turbine disk for rotation therewith. It is also contemplated, in turbine blade applications, that the airfoil 16 may be integrally formed with a disk or ring to form part of a blisk (bladed disk) or bling (bladed ring).

One specific method of making the vane assembly 10 may include forming the core 30 and wrapping the overwrap 34 around the core 30 as suggested in Figs. 1-4. The method may further include co-processing the core 30 and the overwrap 34 to bond the core and the overwrap with ceramic matrix material 45.

Forming the core 30 may be performed by guiding the ribbon 32 back and forth into position between generally opposing sides of a tube defined by the inner wrap 31 to form the ribs 25 spaced radially apart from one another as suggested in Fig. 4. The step of guiding may include lacing the ribbon 32 through slits 72 formed in inner wrap 42 so that a first portion of the ribbon is arranged inside an interior of the tube defined by the inner wrap and a second portion of the ribbon is arranged outside the interior of the tube defined by the inner wrap. The step of guiding may also include temporarily or permanently stitching, cementing, gluing or otherwise coupling the ribbon to the tube defined by the inner wrap 31 at locations where the two are in contact.

Wrapping the overwrap 34 around the core 30 may include placing one end of plies 44 along the trailing edge 52 of the airfoil 16 and guiding the plies 44 around the leading edge 51 of the airfoil 16 back to the trailing edge 52 of the airfoil 16 as suggested in Figs. 2 and 3. The overwrap 34 thus defines the pressure side 21 and the suction side 22 of the airfoil 16. The pressure side 21 and the suction side 22 of the airfoil 16 are interconnected by the plurality of ribs 25.

The method may also include placing reinforcement fibers 61 (chopped or otherwise) into a space created between the trailing edge 52 of the airfoil 16 defined by the overwrap 34 and the core 30. These reinforcement fibers 61 may become filler 48 upon co-processing with the core 30 and the overwrap 34.

In some examples a preform of the airfoil 16 may formed by chemical vapor infiltration. In other examples, the preform of the airfoil 16 may be formed by a combination of chemical vapor infiltration, melt infiltration, polymer-infiltration-pyrolysis. In other examples, the preform of the airfoil 16 may be formed by a combination of chemical vapor infiltration and polymer-infiltration-pyrolysis.

Ceramic-matrix composite materials (CMCs) provide high temperature capability, low density, and low creep at high temperatures when compared to contemporary alloys. These features make manufacturing turbine components out of CMCs an attractive concept, however, this must be done with care to accommodate the lower strength of CMCs versus metallic solutions.

When constructing a CMC airfoil shape for use as a vane, for example, the out of plane stress applied to the material at the leading edge and trailing edge can become prohibitively high due to ballooning loads. One solution to this problem is to manufacture a rib in close proximity to the trailing edge to reduce the loading taken by the fibers wrapping the tight trailing edge radius. However, the rib is then subjected to a thermal stress due to the differential heating of the pressure side and suction side. This leads to desiring a rib that is not continuous in the radial direction to allow for finite sections of the airfoil to expand and contract as needed. The manufacture of an airfoil as here so far described out of fabric layup is a non-trivial problem to which the concepts herein provide a solution.

## Claims

1. A ceramic-matrix composite airfoil (16) for use in a gas turbine engine,
suitable to form a vane assembly (10) for a gas turbine engine, the assembly comprising
an inner platform (12) and an outer platform (14) spaced apart from the inner platform (12) to define a gas path (18) therebetween, whereby the ceramic-matrix composite airfoil (16) extends from the inner platform (12) to the outer platform (14) across the gas path (18),
the airfoil (16) **characterized in that** a core (30) having an inner wrap (31) and a ribbon (32) that extends back and forth within an interior space (24) formed by the inner wrap (31) to form a plurality of radially spaced ribs (25) that interconnect a pressure side (21) with a suction side (22) of the airfoil (16), and
an overwrap (34) that wraps around the core (30) to form the pressure side (21) and the suction side (22) of the airfoil (16),
wherein the ribbon (32) comprises a first portion as well as a second portion, and the second portion (82) of the ribbon (32) extends across the interior (24) of the inner wrap (31) at a variable distance from the inner platform (12),
wherein the ribbon includes at least one ply (42) of ceramic containing reinforcement.

2. The ceramic-matrix composite airfoil of claim 1, wherein the inner wrap (31) includes a tube (41) of ceramic-containing reinforcement (61), the ribbon (32) includes ceramic-containing reinforcement (61), and the tube (41) of ceramic-containing reinforcement (61) included in the inner wrap (31) is bonded to the ceramic-containing reinforcement (61) of the ribbon (32) by a ceramic matrix (45).

3. The ceramic-matrix composite airfoil of one of the preceding claims, wherein an axial width (32) of the ribbon (32) is greater than a radial height (32) of the ribbon (32).

4. The ceramic-matrix composite airfoil of one of the preceding claims, wherein the first portion (81) of the ribbon (32) extends across the interior (24) of the inner wrap (31) at a generally constant distance from the inner platform (12), and/or
wherein a third portion (83) of the ribbon (32) extends radially along an outer surface (310) of the inner wrap (31) and interconnects the first portion and the second portion of the ribbon (32).

5. The ceramic-matrix composite airfoil of one of the preceding claims, wherein the inner wrap (31) is formed to include a plurality of slits (72) and the ribbon (32) extends through the slits (72).

6. The ceramic-matrix composite airfoil of claim 2, wherein the tube (41) of ceramic-containing reinforcement (61) does not have a seam that extends radially between the inner platform (12) and the outer platform (14).

7. The ceramic-matrix composite airfoil of one of the preceding claims, wherein the overwrap (34) includes one or more plies (42) of ceramic-containing reinforcement (61) that are bonded to the inner wrap (31) by a ceramic matrix (45).

8. A vane assembly (10) for a gas turbine engine, the assembly comprising
an inner platform (12) and an outer platform (14) spaced apart from the inner platform (12) to define a gas path (18) therebetween, and
a ceramic-matrix composite airfoil (16) according to any one of claims 1 to 7, wherein the ceramic-matrix composite airfoil (16) extends from the inner platform (12) to the outer platform (14) across the gas path (18), the ceramic-matrix composite airfoil (16) formed to include a pressure side (21), a suction side (22), and a plurality of axially-aligned ribs (25) spaced radially apart from one another between the inner platform (12) and the outer platform (14) that interconnect the pressure side (21) with the suction side (22)

9. A method of making a ceramic-matrix composite airfoil (16) for use in a gas turbine engine, the method **characterized in that** it comprises guiding a ribbon (32) back and forth between generally opposing sides of a tube (41) defined by an inner wrap (31) to form a core (30) having a plurality of ribs (25) spaced radially apart from one another, wherein the ribbon (32) comprises a first portion as well as a second portion, and the second portion (82) of the ribbon (32) extends across the interior (24) of the inner wrap (31) at a variable distance from an inner platform (12),
wrapping an overwrap (34) around the core (30) to define a pressure side (21) and a suction side (22) of the airfoil (16) that are interconnected by the plurality of ribs (25), and
co-processing the core (30) and the overwrap (34) to bond the core (30) and the overwrap (34) with ceramic matrix (45) material.

10. The method of claim 9, wherein guiding the ribbon (32) back and forth includes lacing the ribbon (32) through

## Patentansprüche

1. Keramikmatrix-Verbundprofil (16) zur Verwendung in einem Gasturbinentriebwerk, das zum Bilden einer Schaufelanordnung (10) für ein Gasturbinentriebwerk geeignet ist, wobei die Anordnung Folgendes umfasst:
eine innere Plattform (12) und eine äußere Plattform (14), die von der inneren Plattform (12) beabstandet ist, um einen Gasweg (18) dazwischen zu definieren,
wobei sich das Keramikmatrix-Verbundprofil (16) von der inneren Plattform (12) zu der äußeren Plattform (14) über den Gasweg (18) erstreckt,
wobei das Profil (16), **dadurch gekennzeichnet ist, dass**
ein Kern (30) mit einer Innenhülle (31) und einem Band (32), das sich innerhalb eines durch die Innenhülle (31) gebildeten Innenraumes (24) hin und her erstreckt, um eine Vielzahl von radial beabstandeten Rippen (25) zu bilden, die eine Druckseite (21) mit einer Ansaugseite (22) des Profils (16) verbinden, und
eine Umhüllung (34), die sich um den Kern (30) wickelt, um die Druckseite (21) und die Ansaugseite (22) des Profils (16) zu bilden,
wobei das Band (32) einen ersten Abschnitt sowie einen zweiten Abschnitt umfasst, und der zweite Abschnitt (82) des Bandes (32) sich über das Innere (24) der Innenhülle (31) in einem variablen Abstand von der inneren Plattform (12) erstreckt,
wobei das Band mindestens eine Lage (42) aus keramikhaltiger Verstärkung einschließt.

2. Keramikmatrix-Verbundprofil nach Anspruch 1, wobei die Innenhülle (31) ein Rohr (41) aus keramikhaltiger Verstärkung (61) einschließt, das Band (32) keramikhaltige Verstärkung (61) einschließt und das Rohr (41) aus keramikhaltiger Verstärkung (61), die in der Innenhülle (31) eingeschlossen ist, an die keramikhaltige Verstärkung (61) des Bandes (32) durch eine Keramikmatrix (45) gebunden ist.

3. Keramikmatrix-Verbundprofil nach einem der vorstehenden Ansprüche, wobei eine axiale Breite (32) des Bandes (32) größer ist als eine radiale Höhe (32) des Bandes (32).

4. Keramikmatrix-Verbundprofil nach einem der vorstehenden Ansprüche, wobei sich der erste Abschnitt (81) des Bandes (32) über das Innere (24) der Innenhülle (31) in einem im Wesentlichen konstanten Abstand von der inneren Plattform (12) erstreckt, und/oder
wobei sich ein dritter Abschnitt (83) des Bandes (32) radial entlang einer Außenfläche (31O) der Innenhülle (31) erstreckt und den ersten Abschnitt und den zweiten Abschnitt des Bandes (32) miteinander verbindet.

5. Keramikmatrix-Verbundprofil nach einem der vorhergehenden Ansprüche, wobei die Innenhülle (31) so ausgebildet ist, dass sie eine Vielzahl von Schlitzen (72) einschließt und sich das Band (32) durch die Schlitze (72) erstreckt.

6. Keramikmatrix-Verbundprofil nach Anspruch 2, wobei das Rohr (41) aus keramikhaltiger Verstärkung (61) keinen Saum aufweist, der sich radial zwischen der inneren Plattform (12) und der äußeren Plattform (14) erstreckt.

7. Keramikmatrix-Verbundprofil nach einem der vorstehenden Ansprüche, wobei die Umhüllung (34) eine oder mehrere Lagen (42) einer keramikhaltigen Verstärkung (61) einschließt, die mit der Innenhülle (31) durch eine Keramikmatrix (45) verbunden sind.

8. Schaufelanordnung (10) für ein Gasturbinentriebwerk, wobei die Anordnung umfasst
eine innere Plattform (12) und eine äußere Plattform (14), die von der inneren Plattform (12) beabstandet ist, um einen Gasweg (18) dazwischen zu definieren, und ein Keramikmatrix-Verbundprofil (16) nach einem der Ansprüche 1 bis 7, wobei sich das Keramikmatrix-Verbundprofil (16) von der inneren Plattform (12) zu der äußeren Plattform (14) über den Gasweg (18) erstreckt, wobei das Keramikmatrix-Verbundprofil (16) so ausgebildet ist, dass es eine Druckseite (21), eine Ansaugseite (22) und eine Vielzahl von axial ausgerichteten Rippen (25), die radial voneinander beabstandet zwischen der inneren Plattform (12) und der äußeren Plattform (14) angeordnet sind und die die Druckseite (21) mit der Ansaugseite (22) verbinden, einschließt.

9. Verfahren zur Herstellung eines Keramikmatrix-Verbundprofilprofils (16) zur Verwendung in einem Gasturbinentriebwerk, wobei das Verfahren **dadurch gekennzeichnet ist, dass** es
das Hin- und Herführen eines Bandes (32) zwischen im Allgemeinen gegenüberliegenden Seiten eines Rohres (41), das durch eine Innenhülle (31) definiert ist, um einen Kern (30) mit einer Vielzahl von Rippen (25) zu bilden, die radial voneinander beabstandet sind, wobei das Band (32) einen ersten Abschnitt sowie einen zweiten Abschnitt umfasst, und der zweite Abschnitt (82) des Bandes (32) sich über das Innere (24) der Innenhülle (31) in einem variablen Abstand von einer inneren Plattform (12) erstreckt,
das Wickeln einer Umhüllung (34) um den Kern (30), um eine Druckseite (21) und eine Ansaugseite (22) des Profils (16) zu definieren, die durch die Vielzahl von Rippen (25) miteinander verbunden sind, und
das Zusammenverarbeiten des Kerns (30) und der Umhüllung (34), um den Kern (30) und die Umhüllung (34) mit keramischem Matrixmaterial (45) zu verbinden, umfasst.

10. erfahren nach Anspruch 9, wobei das Hin- und Herführen des Bandes (32) das Durchschnüren des Bandes (32) einschließt.

## Revendications

1. Surface portante composite à matrice céramique (16) destiné à être utilisé dans un moteur à turbine à gaz, appropriée pour former un ensemble de stator (10) pour moteur à turbine à gaz, l'ensemble comprenant
une plateforme intérieure (12) et une plateforme extérieure (14) espacée de la plateforme intérieure (12) pour définir un trajet de gaz (18) entre elles, la surface portante composite à matrice céramique (16) s'étendant de la plateforme intérieure (12) à la plateforme extérieure (14) à travers le trajet de gaz (18),
la surface portante (16) **caractérisée en ce que**
un noyau (30) ayant une enveloppe intérieure (31) et un ruban (32) qui s'étend en va-et-vient dans un espace intérieur (24) formé par l'enveloppe intérieure (31) pour former une pluralité de nervures espacées radialement (25) qui relient un côté pression (21) avec un côté aspiration (22) de la surface portante (16), et
une enveloppe (34) qui s'enroule autour du noyau (30) pour former le côté pression (21) et le côté aspiration (22) de la surface portante (16),
le ruban (32) comprenant une première partie ainsi qu'une deuxième partie, et la deuxième partie (82) du ruban (32) s'étendant à travers l'intérieur (24) de l'enveloppe intérieure (31) à une distance variable de la plateforme intérieure (12),
le ruban comprenant au moins une couche (42) de renforcement contenant de la céramique.

2. Surface portante composite à matrice céramique selon la revendication 1, dans lequel l'enveloppe intérieure (31) comprend un tube (41) composé de renforcement (61) contenant de la céramique, le ruban (32) comprend un renforcement (61) contenant de la céramique, et le tube (41) composé de renforcement (61) contenant de la céramique inclus dans l'enveloppe intérieure (31) est lié au renforcement (61) contenant de la céramique du ruban (32) par une matrice céramique (45).

3. Surface portante composite à matrice céramique selon l'une des revendications précédentes, dans lequel une largeur d'axe (32) du ruban (32) est supérieure à une hauteur radiale (32) du ruban (32).

4. Surface portante composite à matrice céramique selon l'une des revendications précédentes, dans lequel la première partie (81) du ruban (32) s'étend à travers l'intérieur (24) de l'enveloppe intérieure (31) à une distance généralement constante de la plateforme intérieure (12), et/ou
dans lequel une troisième partie (83) du ruban (32) s'étend radialement le long d'une surface extérieure (310) de l'enveloppe intérieure (31) et relie la première partie et la deuxième partie du ruban (32).

5. Surface portante composite à matrice céramique selon l'une des revendications précédentes, dans lequel l'enveloppe intérieure (31) est formée pour inclure une pluralité de fentes (72) et le ruban (32) s'étend à travers les fentes (72).

6. Surface portante composite à matrice céramique selon la revendication 2, dans lequel le tube (41) composé de renforcement (61) contenant de la céramique ne présente pas une couture qui s'étend radialement entre la plateforme intérieure (12) et la plateforme extérieure (14).

7. Surface portante composite à matrice céramique selon l'une des revendications précédentes, dans lequel l'enveloppe (34) comprend une ou plusieurs couches (42) de renforcement contenant de la céramique (61) qui sont liées à l'enveloppe intérieure (31) par une matrice céramique (45).

8. Ensemble de stator (10) pour une turbine à gaz, l'ensemble comprenant
une plateforme intérieure (12) et une plateforme extérieure (14) espacée de la plateforme intérieure (12) pour définir un trajet de gaz (18) entre elles, et
une surface portante composite à matrice céramique (16) selon l'une quelconque des revendications 1 à 7, dans lequel la surface portante composite à matrice céramique (16) s'étend de la plateforme intérieure (12) à la plateforme extérieure (14) à travers du trajet de gaz (18), la surface portante composite à matrice céramique (16) formée pour inclure un côté pression (21), un côté aspiration (22), et une pluralité de nervures (25) alignées axialement espacées radialement les unes des autres entre la plateforme intérieure (12) et la plateforme extérieure (14) qui relient le côté pression (21) avec le côté aspiration (22).

9. Procédé de fabrication d'une surface portante composite à matrice céramique (16) destinée à être utilisée dans un moteur à turbine à gaz, le procédé étant **caractérisé en ce qu'**il consiste à guider un ruban (32) en va-et-vient entre des côtés généralement opposés d'un tube (41) défini par une enveloppe intérieure (31) pour former un noyau (30) ayant plusieurs nervures (25) écartées radialement les unes des autres, dans lequel le ruban (32) comprend une première partie ainsi qu'une deuxième partie, et la deuxième partie (82) du ruban (32) s'étend à travers l'intérieur (24) de l'enveloppe intérieure (31) à une distance variable d'une plateforme intérieure (12),
enrouler une enveloppe (34) autour du noyau (30) pour définir un côté pression (21) et un côté aspiration (22) de la surface portante (16) qui sont interconnectés par la pluralité de nervures (25), et
traiter simultanément le noyau (30) et l'enveloppe (34) pour lier le noyau (30) et l'enveloppe (34) avec un matériau à matrice céramique (45).

10. Procédé selon la revendication 9, dans lequel le fait de guider le ruban (32) en va-et-vient comprend le laçage du ruban (32) à travers celui-ci.
